# EUROPÄISCHE PATENTSCHRIFT

(11) **EP 3 045 306 B1**
(45) Veröffentlichungstag und Bekanntmachung des Hinweises auf die Patenterteilung: **15.11.2017**
(21) Anmeldenummer: 16151315.5
(22) Anmeldetag: 14.01.2016
(51) Int. Cl.: B32B 5/02, B32B 27/20, B32B 27/30, E04B 1/80, B32B 5/18

(54) **DECKLAGE, DÄMMPLATTE UND WÄRME-DÄMM-VERBUNDSYSTEM**
TOPSHEET, INSULATING PANEL AND HEAT INSULATION COMPOSITE SYSTEM
COUCHE SUPERFICIELLE, PANNEAU ISOLANT ET SYSTEME COMPOSITE D'ISOLATION THERMIQUE

(30) Priorität: 16.01.2015 DE 102015000255
(43) Veröffentlichungstag der Anmeldung: 20.07.2016
(73) Patentinhaber: Schillings GmbH & Co. KG, 41751 Viersen (DE)
(72) Erfinder: Schillings, Hans, 41751 Viersen (DE); Schillings, Eric, 41751 Viersen (DE)
(74) Vertreter: dompatent von Kreisler Selting Werner - Partnerschaft von Patent- und Rechtsanwälten mbB

(56) Entgegenhaltungen:
- EP-A1- 2 364 841
- EP-A2- 0 446 486
- US-A1- 2010 203 790

## Beschreibung

Die vorliegende Erfindung betrifft eine Decklage einer Dämmplatte, vorzugsweise einer PUR-Dämmplatte, umfassend oder bestehend aus folgenden Schichten: eine sauerstoffdichte Schicht, b) eine Trägerschicht, c) eine mineralische Schicht, wobei die sauerstoffdichte Schichtalkalibeständig und wasserdampfdurchlässig ist. Des Weiteren wird ein Wärme-Dämm-Verbundsystem mit Dämmstoff zum Dämmen einer Wand, vorzugsweise einer Innenwand oder einer Gebäudeaußenwand, wie sie insbesondere für Wärmeaußendämmmaßnahmen beim Neubau, der Sanierung von Altbauten und nachträglich vorzunehmenden Maßnahmen zur Wärmedämmung eingesetzt werden kann, bereitgestellt. Diese weist eine vorgeschlagene Decklage auf.

Zur Verringerung des Kohlenstoffdioxidausstoßen, der durch die Heizung von Gebäuden entsteht, werden Wärmedämmmaßnahmen beim Bau neuer Gebäude und bei der Altbausanierung eingesetzt. Beispielsweise ist aus der DE 10 2010 000 600 A1 bekannt, Wärme-Dämm-Verbund-Systeme zum Dämmen von Gebäudeaußenwänden oder zum Einsatz im Bereich des Innenausbaus von Gebäuden zu verwenden. Aus der EP 1 900 511 A1 wiederum ist es bekannt, eine dampfdichte Schicht für ein derartiges Wärme-Dämm-Verbund-System einzusetzen.

Gegenüber diesem Stand der Technik ist es die Aufgabe, eine verbesserte Eigenschaft von Lagensystemen zur Dämmung zu schaffen, die den bauphysikalischen Gegebenheiten mit unterschiedlichen Temperaturen und Feuchten und deren Wechsel Rechnung trägt. Darüber hinaus führt ein Trend zu immer niedrigeren U-Werten zu größeren Dämmstoffdicken. Dem Anwachsen der Dämmstoffdicken soll ebenfalls entgegengewirkt werden.

Es wird daher eine Decklage zur Verwendung auf einer Dämmung mit den Merkmalen des Anspruchs 1, eine Dämmplatte mit den Merkmalen des Anspruchs 10, ein Herstellverfahren zur Herstellung einer Dämmplatte mit den Merkmalen des Anspruchs 13 und ein Wärme-Dämm-Verbundsystem mit vorzugsweise plattenförmigem Dämmstoff zum Dämmen einer Wand, insbesondere einer Gebäudeaußenwand mit den Merkmalen des Anspruchs 14 vorgeschlagen. Vorteilhafte Merkmale, Ausgestaltungen und Weiterbildungen gehen aus der nachfolgenden Beschreibung, den Figuren wie auch aus den weiteren Ansprüchen hervor, wobei einzelne Merkmale aus einer Ausgestaltung nicht auf diese beschränkt sind.

Es wird eine Decklage zur Verwendung auf einer Dämmung, vorzugsweise einer Dämmplatte, umfassend oder bestehend aus folgenden Schichten vorgeschlagen:
a) einer sauerstoffdichten Schicht (1),
b) einer Trägerschicht (2), und
c) einer mineralischen Schicht (3), wobei die sauerstoffdichte Schicht (1) wasserdampfdurchlässig und alkalibeständig ist, wobei der Sauerstoff-Diffusionswert der Decklage kleiner 4,5 ml/m² x d gemäß ASTM 3985 und die Wasserdampfdurchlässigkeit einen Wert s_{d} von größer oder gleich 4 m, gemäß DIN 12086, aufweist und die Alkalibeständigkeit gemäß der Norm "External Thermal Insulation - Composite Systems (ETICS) with Rendering", ETAG 004, Ausgabe 200, erweitert Februar 2013, gegeben ist.

Es hat sich in überraschender Weise in einem Langzeitversuch gezeigt, dass entgegen allen Erwartungen diese Decklage nicht nur sich gut verarbeiten lässt, d.h. beputzbar ist, sondern insbesondere ist auch eine dauerhafte hygrothermische Funktionstüchtigkeit gegeben. Bisher ist die Vorstellung gewesen, dass eine Wasserdampfdurchlässigkeit der Beständigkeit insoweit entgegenwirkt, dass sich Feuchtigkeit aus Mauerwerk und Umwelt im Dämmstoff ansammelt und nicht schnell genug wieder ausdiffundieren kann. Dadurch würde das System durchfeuchtet und die Wärmeleitfähigkeit ansteigen. Die Messungen haben nunmehr einen gegenteiligen Effekt gezeigt. Durch die gezielte Alkalibeständigkeit zumindest der sauerstoffdichten Schicht, insbesondere der gesamten Decklage, ist es ebenfalls gelungen, ein Produkt mit hoher Formstabilität schaffen zu können.

Eine weitere Ausgestaltung sieht vor, dass die Decklage, insbesondere die sauerstoffdichte Schicht, metallfrei ist, insbesondere aluminiumfrei ist. Unter metallfrei im Sinne der Erfindung ist zu verstehen, dass geringe Metallspuren durch Verunreinigungen bzw. Katalysatorreste, die in Polymeren vorhanden sind, durchaus möglich sind. Hingegen sind aber Metallfolien, insbesondere Aluminiumfolien, abgegrenzt, sofern die Decklage dadurch beispielsweise ansonsten alkaliunbeständig und insbesondere wasserdampfdicht, werden würde.

Die Decklage ist eine diffusionsdichte Decklage nach DIN EN 13165, mit einem Sauerstoff-Diffusionswert kleiner 4,5 ml/m²xd gemäß ASTM 3985, die im Gegensatz zu bekannten aluminiumbeschichteten Decklagen alkalibeständig ist, wasserdampfdiffusionsoffene Eigenschaften besitzt und Feuchtigkeit aus einem Bauwerk bzw. aus einem Innenraum ableitet. Die Wasserdampfdurchlässigkeit ist derart, dass sie zumindest einen Wert s_{d} von größer oder gleich 4 m hat, gemäß DIN 12086, auch bei höheren Temperaturen, insbesondere bei 20°C. Durch einen sich ändernden Wert in Abhängigkeit von der Temperatur, der vorzugsweise nicht unter 2 m fällt, wird sichergestellt, dass die Wasserdampfdurchlässigkeit sich an die klimatischen Verhältnisse anpasst, ohne aber zu gering zu werden. Durch ein Wärme-Dämm-Verbund-System mit der Nutzung einer Decklage wie vorgeschlagen, ist es möglich, gemauerte Wände aber auch Decken bauphysikalisch besser dämmen zu können. Eine Wand gilt üblicherweise als luftdicht. Sollte ein Gebäude nicht luftdicht sein, kann feuchte Luft aus den Innenräumen in das Bauwerk wandern und Feuchteschäden durch Kondensation verursachen, insbesondere durch Konvektion.

Eine derartige Decklage weist zum Beispiel den Vorteil auf, dass sie gewickelt werden kann. Dadurch kann sie beispielsweise für eine Weiterverarbeitung als Rolle aufgewickelt und an einem anderen Bearbeitungsplatz, zum Beispiel direkt bei einer Plattenherstellung abgewickelt und sodann in einer Verarbeitungsstraße kontinuierlich weiterverarbeitet. Die Decklage kann aber auch in anderer Weise weiterverarbeitet werden, zum Beispiel durch Aufkaschieren auf Dämmplatten.

Es ist vorgesehen, dass die Decklage eine eine mineralische Schicht umfasst. Die mineralische Schicht wird vorzugsweise durch Beschichten der Trägerschicht geschaffen. Die mineralische Schicht weist den Vorteil auf, dass sie beputzbar ist. Auch kann die mineralische Schicht als Haftgrund dienen, zum Beispiel für einen Armierungskleber, einen sonstigen Kleber, für einen Leichtputz eines Wärme-Dämm-Verbund-Systems oder zum Beispiel auch für einen Fliesenkleber bei einem Innenausbau.

Zusätzlich kann auch eine Kleberschicht vorgesehen sein. Die Kleberschicht ist vorzugsweise zwischen der sauerstoffdichten Schicht und der Trägerschicht angeordnet.

Die Decklage wird speziell für Dämmplatten genutzt, die beputzt oder beklebt werden. Derartige Dämmplatten können beispielsweise in einem Wärme-Dämm-Verbund-System, abgekürzt WDVS, wie auch in anderen Bereichen zum Einsatz kommen. So kann zum Beispiel bei einem Innenausbau eine derartige Decklage zum Einsatz kommen, beispielsweise zusammen mit einem Fliesenträgerelement.

Durch Verwendung der sauerstoffdichten Schicht, insbesondere in Form einer sauerstoffdichten Folie in der Decklage, gelingt es beispielsweise, eine Unempfindlichkeit gegenüber Alkalien zu schaffen. So kann eine Alkalibeständigkeit geschaffen werden, wie sie gemäß der Norm "EXTERNAL THERMAL INSULATION - COMPOSITE SYSTEMS (ETICS) WITH RENDERING", ETAG 004, Ausgabe 2000, erweitert Februar 2013, vorgesehen und geprüft werden kann. Gemäß einer Ausgestaltung ist zumindest die sauerstoffdichte Schicht alkalibeständig, vorzugsweise ist die gesamte Decklage alkalibeständig. Darüber hinaus ist es möglich, eine derartige Decklage wasserdampfdurchlässig zu gestalten.

Die erfindungsgemäße Decklage sieht vor, dass zumindest die sauerstoffdichte Schicht wasserdampfdurchlässig ist, vorzugsweise die gesamte Decklage wasserdampfdurchlässig ist. Dieses erlaubt zum Beispiel, dass anstehende Baufeuchte ausdiffundieren kann, insbesondere durch die Decklage hindurchdiffundieren kann.

Bevorzugt ist es, wenn die Decklage als sauerstoffdichte Schicht einen Mehrlagenfilm mit einer Lage aus EVOH aufweist, welche zumindest auf einer Seite, mit einer Schutzschicht versehen ist. Die Schutzschicht weist auf, vorzugsweise besteht aus, ein oder mehreren Polyolefinen, vorzugsweise aus Polypropylen oder Polyethylen oder Mischungen daraus.

Eine Weiterbildung sieht vor, dass die sauerstoffdichte Schicht eine Folie ist, die bevorzugt einen veränderlichen s_{d}-Wert aufweist. Durch die Änderung des s_{d}-Werts kann je nach Umweltparameter eine unterschiedliche Wasserdampfdurchlässigkeit ermöglicht werden. Bevorzugt weist die sauerstoffdichte Schicht eine Dicke von 10 bis 200 µm, vorzugsweise von 30 bis 150 µm, weiter bevorzugt eine Dicke von 40 bis 80 µm auf, insbesondere von etwa 60 µm, auf.

Hinsichtlich der Trägerschicht ist es bevorzugt, dass die Trägerschicht ein Vlies aufweist, vorzugsweise aus einem Vlies besteht. Die Trägerschicht kann zum Beispiel ein Glasfaservlies, ein Glasfaser/Polyester-Gemisch-Vlies, ein Glasgewebevlies, ein Glasgelegevlies oder ein Polyestervlies sein. Weiter bevorzugt ist es, wenn die Trägerschicht der Decklage ein Gewicht von 30 g/m² bis 300 g/m², vorzugsweise 30 g/m² bis 150 g/m², besonders bevorzugt 30 bis 80 g/m², insbesondere von etwa 50 g/m² aufweist.

Die Decklage ist mit einer mineralischen Schicht verbunden. Vorzugsweise enthält die mineralische Schicht i) einen anorganischen Bestandteil ausgewählt aus der Gruppe bestehend aus Calciumcarbonat, Siliziumdioxid, Bariumsulfat und Mischungen daraus und ii) ein Bindemittel. Vorzugsweise weist der anorganische Bestandteil eine Korngröße zwischen 1 und 200 µm auf.

Eine Ausgestaltung sieht vor, dass die Beschichtung ein Bindemittel hat, vorzugsweise ein Bindemittel, welches ein Copolymerisat aus Acrylsäureester und Styrol enthält, vorzugsweise daraus besteht. Weiterhin ist es bevorzugt, dass die Beschichtung, vorzugsweise die mineralische Schicht ein Flammschutzmittel, vorzugsweise Aluminiumhydroxid enthält. Die Beschichtung weist vorzugsweise ein Flächengewicht auf, welches ein Gewicht von 100 g/m² bis 400 g/m², vorzugsweise 150 g/m² bis 300 g/m², besonders bevorzugt 200 bis 275 g/m², insbesondere etwa 230 g/m² aufweist.

Ein Beispiel eines Aufbaus für eine beputzbaren Ausbauplatte bzw. ein Fliesenträgerelement sieht zum Beispiel vor, dass die Beschichtung ein Calciumcarbonat verschiedener Korngrößen zwischen 15 µm und 300 µm aufweist. Vorzugsweise hat das Calciumcarbonat als Füllstoff einen Gewichtsanteil an der Beschichtung, welcher zwischen 40 Gew-% und 65 Gew-%, insbesondere bei etwa 57,7 Gew-% bezogen auf das Gewicht der Beschichtung liegt. Ein Flammschutzmittel weist vorzugsweise einen Gewichtsanteil an der Beschichtung auf, der vorzugsweise zwischen 20 Gew-% und 35 Gew-%, insbesondere etwa 27,5 Gew.-% beträgt. Als Flammschutzmittel wird vorzugsweise Aluminiumhydroxid verwendet. Das Bindemittel ist vorzugsweise eine Dispersion auf Basis eines Copolymerates aus Acrylsäureester und Styrol. Vorzugsweise weist das Bindemittel einen Gewichtsanteil an der Beschichtung von etwa 10 Gew-% bis etwa 18 Gew-%, bevorzugt etwa 13,4 Gew-% auf. Des Weiteren kann ein Verdickungsmittel vorgesehen sein, zum Beispiel ein Celluloseether. Das Verdickungsmittel weist vorzugsweise 0,5 Gew-% bis etwa 1,5 Gew-% Gewichtsanteil an der Beschichtung auf. Hinzu kommt ein Netzmittel, vorzugsweise mit einem Gewichtsanteil von etwa 0,05 Gew-% bis etwa 1,5 Gew-%. Ein Filmkonservier wird ebenfalls genutzt, vorzugsweise mit einem Gewichtsanteil von etwa 0,08 Gew-% bis etwa 0,2 Gew-% an der Beschichtung. Im Übrigen können noch weitere Additive in der Beschichtung vorgesehen sein, zum Beispiel mit einem Gewichtsanteil an der Beschichtung von etwa 0,1 Gew-% bis etwa 0,45 Gew-%, vorzugsweise von etwa 0,25 Gew-%. Eine derartige Beschichtung wird auf den Träger aufgebracht und kann dadurch die Decklage bilden. Beispielsweise kann als Träger ein Vlies, zum Beispiel ein Glasfaservlies genutzt werden. Neben dem Glasfaservlies können auch andere Vliese oder gegebenenfalls Gewebe zum Einsatz als Träger kommen, zum Beispiel Glasfaser/Polyester-Gemisch -Vlies, Glasgewebevliese, Glasgelegevliese und/oder Polyestervliese. Vorzugsweise ist das Vlies UV-beständig ausgerüstet. Träger und Beschichtung können sodann für das Fliesenträgerelement bzw. die Ausbauplatte genutzt werden.

Ein Aufbau des zum Beispiel Fliesenträgerelements in der Anwendung sieht zum Beispiel folgende Reihenfolge vor: Fliese, Kleber oder Putz, Dämmplatte mit beidseitig aufgetragener vorgeschlagener Decklage, Kleber, Wand.

Bei zum Beispiel Ausbauplatten wird die Dämmplatte auf eine vorhandene Wand oder Decke mittels speziellen zementären Klebern oder Dispersionsklebern aufgebracht. Dabei wird die vorgeschlagene Decklage, die sauerstoffundurchlässig aber wasserdampfdurchlässig ist, beidseitig auf der Dämmplatte angeschäumt oder aufkaschiert, einseitig mit einem oder mehreren dieser Kleber bestrichen und auf die vorbehandelte Wand aufgebracht. Zur Sicherung können zusätzliche Ankerschrauben verwendet werden. Weiterhin kann die nun außen liegende Seite der Dämmplatte ebenfalls mit einem Kleber bestrichen und mit keramischen Wandvliesen belegt werden.

Eine Weiterbildung sieht vor, dass die Decklage die Schichten in nachfolgender Reihenfolge angeordnet aufweist: sauerstoffdichte Schicht, optional Kleberschicht, Trägerschicht, und mineralische Schicht. Vorzugsweise ist die Kleberschicht eine PU-Hotmelt-Schicht, vorzugsweise eine reaktiver PU-Hotmelt-Schicht ist. Eine Reaktivität kann zum Beispiel durch die Luftfeuchte erzielt werden, insbesondere durch hindurchdiffundierenden Wasserdampf.

Bevorzugt ist des Weiteren, dass die Decklage eine Dicke von 200 µm bis 1000µm, vorzugsweise von 300 bis 750 µm, besonders bevorzugt eine Dicke von 400 bis 600 µm, insbesondere von etwa 500 µm aufweist. Weiterhin ist es bevorzugt, wenn die Decklage ein Gewicht von 200 g/m² bis 800 g/m², vorzugsweise 300 g/m² bis 600 g/m², besonders bevorzugt 360 bis 470 g/m², insbesondere von etwa 420 g/m² aufweist.

Nachfolgend werden Dämmplatten näher beschrieben, die vorteilhaft mit der vorgeschlagenen Decklage verwendbar sind.

Eine Ausgestaltung sieht vor, dass die Dämmplatte umfasst oder besteht aus:
a) einer Decklage wie oben und auch nachfolgend noch näher beschrieben,
b) einem Dämmstoff aus Polyurethan-Hartschaum oder Polyisocyanurat-Hartschaum und optional
c) einer zweiten Decklage, wie vorgeschlagen.

Eine Ausgestaltung sieht vor, dass die Dämmplatte die Decklage oder die beiden Decklagen einseitig bzw. zweiseitig auf die Flachseiten des Dämmstoffs angebracht aufweist, wobei die jeweilige sauerstoffdichte Schicht der Decklage bzw. der Decklagen den Flachseiten des Dämmstoffs zugewandt sind.

Bevorzugt ist der Dämmstoff ein Polyurethan-Hartschaum oder Polyisocyanurat-Hartschaum. Insbesondere ist der Dämmstoff ein Schaum, der durch Reaktion einer Isocyanatkomponente ausgewählt aus der Gruppe bestehend aus Hexamethylendiisocyanat (HDI), Toluylendiisocyanat (TDI), Methylendi(phenylisocyanat) (MDI), Polymeres Diphenylmethandiisocyanat (PMDI), Naphthylendiisocyanat (NDI), Isophorondiisocyanat (IPDI) und 4,4'-Diisocyanatodicyclohexylmethan (H12MDI) mit einer Polyolkomponente hergestellt wird.

Gemäß einer Ausgestaltung ist vorgesehen, dass der Schaum mit einem physikalischen und/oder chemischen Treibmittel, zum Beispiel einem Pentan-haltigen Treibmittel und/oder Kohlendioxid als Treibmittel aufgeschäumt wurde. Es können jedoch auch andere physikalische Treibmittel zum Einsatz gelangen,

Eine Ausgestaltung sieht vor, dass eine mit der Dämmplatte verbundene Decklage die folgende nach DIN 12086 bestimmte Wasserdampf-Diffusionsäquivalente Luftschichtdicke (sd-Wert) aufweist:
bei einer Temperatur von 20°C bis 30°C und 0% auf einer Seite und 80% relativer Luftfeuchtigkeit auf einer anderen Seite einen s_{d}-Wert von 0,02 m bis 100m, vorzugsweise 1m bis 60m, insbesondere 15m bis 55m;
bei einer Temperatur von 70°C und 3% auf der einen Seite und 100% relativer Luftfeuchtigkeit auf der anderen Seite einen s_{d}-Wert von 0,02 m bis 80m, vorzugsweise 0,5m bis 60m, insbesondere 1m bis 6m.

Bevorzugt ist es, wenn der s_{d}-Wert immer eine Mindestgröße von vorzugsweise 2 m oder mehr aufweist. Dadurch wird auch bei hohen Temperaturen eine ausreichende Wasserdampfdurchlässigkeit sichergestellt.

Bevorzugt wird die Dämmplatte als ein Fliesenträgerelement, als ein Wärme-Dämm-Verbundsystem oder als eine Bauplatte genutzt. Gemäß einer Weiterbildung ist vorgesehen, dass ein Treibgas in dem verwendeten Dämmstoff mittels der Decklage zurückgehalten wird und nicht austritt. Auch kann zum Beispiel auf einer Seite des Dämmstoffs eine Aluminiumschicht und auf der anderen Seite die vorgeschlagene Decklage angeordnet sein. Wird beispielsweise PU als Dämmstoff verwendet, wird bevorzugt am Dämmstoff beidseitig die vorgeschlagene Decklage angeordnet.

Gemäß einem weiteren Gedanken der Erfindung, wird ein Verfahren zur Herstellung einer Dämmplatte vorgeschlagen, umfassend die folgenden Schritte:
- Bereitstellen einer Decklage wie oben bzw. nachfolgend vorgeschlagen,
- Aufbringen eines Dämmstoffes aus Polyurethan oder Polyisocyanurat auf die bereitgestellte Decklage und
- optionales Aufbringen einer zweiten Decklage, wie oben bzw. nachfolgend vorgeschlagen, auf den Dämmstoff.

Bevorzugt wird eine Dämmplatte mit beidseitig aufgebrachter Decklage als Bauplatte verwendet. So kann diese Bauplatte im Trockenbau aber auch bei der Verlegung von Fliesen zum Einsatz kommen. Die Bauplatte weist vorzugsweise einen Dämmstoff auf, der einen geschlossenporigen Schaum besitzt, der eine Wasserdichtigkeit ermöglicht. Es kann aber auch ein offenporiger Schaum zum Einsatz kommen, der zum Beispiel wasserdampfdurchlässig ist.

Ein weiteres, alternatives Verfahren zur Herstellung der Dämmplatte umfasst die folgenden Schritte:
- Bereitstellen eines Dämmstoffes, aus Polyurethan-Hartschaum oder Polyisocyanurat-Hartschaum, welcher vorzugsweise als plattenförmiger Dämmstoff vorliegt,
- Aufbringen einer Decklage, die wie oben bzw. nachfolgend vorgeschlagen ausgestaltet ist, auf den bereitgestellten Dämmstoff und
- optionales Aufbringen einer zweiten Decklage auf den bereitgestellten Dämmstoff, wobei die zweite Decklage ebenfalls wie oben bzw. nachfolgend vorgeschlagen ausgeführt ist.

Aus der DE 10 2008 052 155 A1 geht ein Herstellungsverfahren für eine Trägerplatte hervor, welches auch hier zur Anwendung gelangen kann.

Weiterhin besteht die Möglichkeit, dass der eigentliche Dämmstoff erst während der Herstellung der Dämmplatte erzeugt wird. So kann beispielweise auf eine Decklage zum Beispiel eine 2-Komponenten-Flüssigkeit zusammen mit einem Treibmittel aufgebracht werden und dann dort aufschäumen. Nach dem Aufschäumen liegt dann der Dämmstoff vor und die Verbindung mit der Decklage ist besonders innig. Auch kann zwischen zwei Decklagen das Aufschäumen zum Dämmstoff erfolgen, so dass beidseitig eine innige Verbindung mit der jeweiligen Decklage entsteht.

Des Weiteren wird zum Dämmen einer Wand vorgeschlagen, die folgenden Schritte auszuführen:
Aufbringen einer Dämmplatte wie oben beschrieben bzw. nachfolgend vorgeschlagen auf die Innenseite oder die Außenseite der zu dämmenden Wand.

Gemäß einem weiteren Gedanken der vorliegenden Erfindung wird ein Wärme-Dämm-Verbundsystem mit Dämmstoff, vorzugsweise plattenförmigem Dämmstoff, zum Dämmen einer Gebäudeaußenwand wie folgt vorgeschlagen: Der Dämmstoff weist eine erste Seite und eine der ersten Seite gegenüberliegende zweite Seite auf, wobei auf der ersten Seite eine erste Decklage gemäß der vorliegenden Erfindung aufgebracht ist und auf der zweiten Seite eine zweite Decklage aufgebracht ist. Die erste Decklage und die zweite Decklage umfassen jeweils eine Trägerschicht und eine damit verbundene erste Deckschicht, wobei die erste Decklage und die zweite Decklage jeweils auf der der ersten Deckschicht gegenüberliegenden Seite der Trägerschicht eine zweite Deckschicht aufweisen. Die zweite Deckschicht der ersten Decklage ist mit der ersten Seite des Dämmstoffs verbunden und die zweite Deckschicht der zweiten Decklage ist mit der zweiten Seite des Dämmstoffs verbunden. Vorgesehen ist, dass zumindest eine der beiden zweiten Deckschichten eine luftdichte aber wasserdampfdurchlässige Deckschicht ist. Weiterhin bevorzugt ist es, wenn beide zweiten Deckschichten luftdicht aber wasserdampfdurchlässig sind. Auf diese Weise kann der zweiten Deckschicht eine luftundurchlässige Eigenschaft zur Verfügung gestellt werden, ohne dass aber Feuchtigkeit zurückgehalten wird oder anstehende Baufeuchte nicht ausdiffundieren könnte.

Eine Weiterbildung sieht vor, dass beide Decklagen luftdicht, aber wasserdampfdurchlässig sind. Besonders bevorzugt ist, wenn zumindest eine, vorzugsweise jeweils beide Deckschichten, vorzugsweise in Form eines Films, zwar eine Wasserdampfdiffusion zulässt, nicht hingegen eine Sauerstoffdiffusion. Bevorzugt ist diese Sauerstoffdiffusion vollständig unterbunden bzw. nur minimalst, entsprechend eines geschichteten Films gemäß ASTM 3985 mit einer 50 µm Aluminiumschicht. Bevorzugt wird dazu beispielsweise als Filmmaterial EVOH eingesetzt. Das Filmmaterial kann beispielsweise gegen Beschädigungen geschützt sein, zum Beispiel mittels einer jeweiligen Schutzschicht auf jeder Seite. Dieses kann eine Beschichtung wie auch ein Film sein, beispielsweise ein Polymerfilm. Bevorzugt wird ein zumindest dreilagiges Coextrudat aufweisend PP, EVOH und dann wieder PP genutzt. Es können auch andere Schutzschichtmaterialien als PP genutzt werden. PP ist die Abkürzung für Polypropylene, EVOH die Abkürzung für Ethylen-Vinylalkohol-Copolymer.

Bevorzugt wird ein Coextrudat eingesetzt, dass zumindest dreischichtig ist: zum Beispiel PP-EVOH-PP. Das Coextrudat weist vorzugsweise zumindest fünf Schichten auf, wobei zwischen den jeweiligen Schichten ein Haftvermittler genutzt wird. Zum Beispiel weist eine PP-Schicht und die EVOH-Schicht bevorzugt als Haftvermittler ein PP mit anderem Molekulargewicht als die PP-Schicht auf. Ebenfalls bevorzugt ist es, wenn das Schutzschichtmaterial einen UV-Schutz bietet, zum Beispiel durch Zugabe eines entsprechenden Additivs in das Polymer.

Eine weitere Ausgestaltung sieht vor, dass das Filmmaterial einer Corona-Behandlung unterzogen wird. Die Corona-Behandlung ermöglicht eine Haftvermittlung zwischen der Deckschicht und dem verwendeten Dämmstoff. Eine weitere Ausgestaltung sieht vor, dass ein Haftvermittler auf PU-Basis zum Einsatz zwischen der Deckschicht und dem Dämmstoff kommt, zum Beispiel bei Verwendung von PP als Außenschicht des Filmmaterials und PU für den Dämmstoff. Bei anderen Kombinationen an Materialien können andere Haftvermittler zum Einsatz kommen.

Die erste und die zweite Decklage können gemäß einer Ausgestaltung wickelbar sein, so dass bei der Herstellung des Wärme-Dämm-Verbundsystems mit vorzugsweise plattenförmigen oder abwickelbarem Dämmstoff, beispielsweise mit einem Dämmstoff aus PUR/PIR-Hartschaum, die erste und die zweite Decklage als beidseitiger Träger der Dämmstoffes, insbesondere der Schaummasse verwendet werden können. Die auf die erste und die zweite Seite des Dämmstoffes aufzubringende erste Decklage und zweite Decklage können zum Beispiel von Rollen abgewickelt werden und bei der Herstellung des plattenförmigen Dämmstoffes direkt in die Fertigungsstrecke geführt werden. In einer weiteren Ausgestaltung können die erste Decklage und die zweite Decklage nachträglich auf den plattenförmigen Dämmstoff aufkaschiert oder anderweitig aufgebracht werden.

Als Materialien, die als eine sauerstoffdichte, aber wasserdampdurchlässige Deckschicht eingesetzt werden, sind zum Beispiel Polymere wie Polyethylen, Polyamide, EthylenAcrylsäure-Copolymerisate, lonomere und Polyester in dünner Schicht nutzbar. Diese Materialien kann man üblicherweise in Form von Folien oder Schichtstoffen verwenden. Die zweite Deckschicht aus diesen Materialien bietet als Folie oder als geeigneter Schichtstoff beispielsweise den Vorteil, dass ihr Widerstand gegen die Diffusion des Wasserdampfs von der relativen Luftfeuchtigkeit abhängig ist. Bei geringer relativer Luftfeuchtigkeit ist dieser Widerstand höher als bei hoher relativer Luftfeuchtigkeit. In einer weiteren Ausgestaltung kann der zweiten Deckschicht ein Zusatzstoff, beispielsweise modifizierte Polyoelfine, insbesondere Polyethylencopolymer, oder lonomere zugemischt werden, um die Eigenschaften der zweiten Deckschicht zu verbessern. Unterschiedliche Materialien aber auch diffusionsoffene Folien zum Einsatz für die zweite Deckschicht sind unter anderem jedoch auch in der DE 195 420 C1, EP 1 372 956 B1 und der DE 20 2010 017 934 U1 beschrieben, auf deren jeweiliger Inhalt hiermit vollumfänglich verwiesen wird. Bevorzugt weist eine als zweite Deckschicht genutzte Folie einen sd-Wert auf, der sich mit der Temperatur ändert. Insbesondere ist der sd-Wert so ausgewählt, dass für eine Funktion im Sommer die Folie einen anderen sd-Wert aufweist als im Winter.

In einer bevorzugten Ausführungsform sind die Trägerschicht auf der Basis von Vlies und die damit verbundene erste Deckschicht auf Basis anorganischer Füllstoffe ausgebildet. Die Trägerschicht kann als Glasfaservlies, als Glasfaser-/Polyester-Gemisch-Vlies, als Glasgewebevlies, als Glasgelegevlies oder auch als Polyestervlies ausgebildet sein. Auch andere Vliesmaterialien wie auch unterschiedliche Vliese wie Stapelfaservliese, Spinnvliese oder Meltblowvliese können genutzt werden. Die anorganischen Füllstoffe der ersten Deckschicht können beispielsweise Calciumcarbonat, Siliciumdioxid und/oder Bariumsulfat sein. In einer weiteren Ausgestaltung kann die Trägerschicht faserverstärktem Zellulosematerialien, beispielsweise Papierbahnen, Folien aus Kunstfaserspinngeweben oder auch perforierter Polyethylenfolie umfassen, beispielsweise auch daraus bestehen. Gemäß einer Ausgestaltung können die Trägerschicht und die erste Deckschicht jeweils einen geringeren Wasserdampfdiffusionswiderstand als die zweite Deckschicht aufweisen.

Gemäß einer Ausgestaltung kann die vorgesehene Deckschicht auf Basis von Calciumcarbonat und/oder Siliciumoxid hergestellt werden, vorzugsweise mit Korngrößen zwischen 1 µm und 300 µm. In einer weiteren Ausgestaltung kann der ersten Deckschicht ein Flammschutzmittel, beispielsweise Aluminiumhydroxid, zugegeben werden. Vorzugsweise kann die Deckschicht ein Bindemittel, beispielsweise eine Dispersion auf Basis von Copolymerisaten aus Acrylsäureester und Styrol aufweisen. Weiterhin können der Deckschicht ein vorzugsweise als Celluloseesther ausgebildetes Verdickungsmittel, ein Netzmittel und/oder ein Filmkonservierungsmittel zugesetzt sein.

Es ist bevorzugt, dass die erste Decklage auf der ersten Deckschicht im Verlauf der weiteren Verarbeitung, zum Beispiel auf einer Baustelle, einen Kleber aufweist, vorzugsweise um eine Armierung aufzunehmen, wobei die Armierung als Grundlage für den Außenputz dient. Beispielsweise kann die zweite Decklage auf der ersten Deckschicht auch einen Kleber aufweisen, so dass die zweite Decklage zum Beispiel mit einer Wand, insbesondere einer Decke, einer Innenwand oder auch einer Gebäudeaußenwand verbindbar ist. Zur Sicherung können zusätzlich Befestigungsmittel, wie beispielsweise Ankerschrauben, verwendet werden. Weiterhin kann zumindest die erste Decklage, vorzugsweise die erste Decklage und die zweite Decklage eine raue Oberfläche zur besseren Haftung von ein oder mehreren Klebematerialien aufweisen.

In einer bevorzugten Ausführungsform weist das Wärme-Dämm-Verbundsystem folgende nach DIN 12086 bestimmte Wasserdampf-Diffusionsäquivalente Luftschichtdicke (s_{d}-Wert) für eine im Wärme-Dämm-Verbundsystem genutzte und vorgeschlagene Decklage auf:
- bei einer Temperatur von 20°C, 30°C und einer relativen Luftfeuchtigkeit von 0% auf der einen und 80% auf der anderen Seite einen s_{d}-Wert von 0,02 m bis 100m, vorzugsweise 1 m bis 60 m, insbesondere 15 m bis 55 m;
- bei einer Temperatur von 70°C und einer relativer Luftfeuchtigkeit von 3% auf der einen Seite und 100% auf der anderen Seite einen sd-Wert von 0,02 m bis 80 m, vorzugsweise 0,5 m bis 60 m, insbesondere 1 m bis 6 m.

Dadurch kann sichergestellt werden, dass das Wärme-Dämm-Verbundsystems besonders vorteilhaft sich an jeweilige Wetterbedingungen anpasst, insbesondere an Jahreszeitenwechsel wie Sommer und Winter, aber auch an Übergangszeiten mit schnellen Temperaturwechseln und unterschiedlicher Luftfeuchte, zum Beispiel innerhalb wie außerhalb eines Gebäudes.

Vorzugsweise ist die zweite Deckschicht mit einem Kleber, vorzugsweise einem flammgeschützten, insbesondere auch alkalibeständigen Kleber, vorzugsweise einem Hot-Melt-Kleber, insbesondere einem PU-Hotmelt-Kleber, an der Trägerschicht befestigt. Auf diese Weise kann sichergestellt werden, dass die zweite Deckschicht mit der Trägerschicht fest verbunden ist und sich die zweite Deckschicht nicht von der Trägerschicht löst. Eine Weiterbildung sieht zum Beispiel vor, dass ein Kleber zum Einsatz kommt, der aufgrund der Luftfeuchte reagiert und seine klebrige Eigenschaft zum Beispiel aktiviert, diese erst erhält und/oder behält.

Es ist bevorzugt, dass die erste Deckschicht alkalibeständig ausgebildet ist. Auf diese Weise kann die erste Deckschicht beispielsweise mit zementären Mörtel bearbeitet werden. Weiterhin kann die erste Deckschicht gute Hafteigenschaften gegenüber Klebemittel, wie Zementkleber, Dispersionsklebern, und Putzmaterialien aufweisen.

In einer weiteren Ausgestaltung kann die erste Decklage und/oder die zweite Decklage fungizide Filmkonservierungseigenschaften aufweisen. Dadurch kann eine pilzfreie Verarbeitung sicher gestellt werden und die Lagerstabilität kann verbessert werden. Gemäß einer Ausgestaltung kann auch alternativ wie zusätzlich eine algizide Ausrüstung vorhanden sein. Eine Weiterbildung sieht zum Beispiel vor, dass die zweite Decklage mit zumindest einer fungiziden Ausrüstung in einer Gebäudeinnenanwendung genutzt wird, die zweite Decklage mit zumindest einer fungiziden Ausrüstung in einer Gebäudeaußenanwendung genutzt wird.

Insbesondere ist gemäß einer bevorzugten Ausführungsform zumindest eine Deckschicht, weiter bevorzugt beide zwei Deckschichten insofern gasdicht, dass sie gemäß ASTM 3985 eine Sauerstoffdurchlässigkeit von kleiner 4,5 cm³/(m²d bar), vorzugsweise kleiner gleich 2 cm³/(m² d bar), insbesondere kleiner gleich 0,5 cm³/(m² d bar) aufweisen. Auf diese Weise kann sichergestellt werden, dass das Wärme-Dämm-Verbundsystem gasdicht gegenüber Sauerstoff ist, und bevorzugt aber gleichzeitig eine Wasserdampfdurchlässigkeit, insbesondere für anstehende Baufeuchte, aufweist.

Vorzugsweise weist die zweite Deckschicht eine Dicke von kleiner gleich 1 mm, vorzugsweise kleiner gleich 100µm, insbesondere kleiner gleich 60µm auf.

Eine bevorzugte Ausführungsform der Erfindung ist eine Decklage zur Verwendung auf einer Dämmplatte, vorzugsweise einer Dämmplatte umfassend Polyurethan oder Polyisocyanurat-Hartschaum, umfassend oder bestehend aus folgenden Schichten:
a) eine sauerstoffdichte Schicht umfassend oder bestehend aus Copolymer aus Vinylalkohol und Ethylen (EVOH),
b) eine Trägerschicht und
c) eine mineralische Beschichtung.

Das Copolymer aus Vinylalkohol und Ethylen ist wasserdampfdurchlässig und alkalibeständig.

Sauerstoffdicht im Sinne der vorliegenden Erfindung ist eine Schicht, wenn sie eine Sauerstoffdurchlässigkeit bei 23°C und 50% relativer Luftfeuchtigkeit (r.F.) von kleiner 4,5 cm³/m²·d·bar, vorzugsweise kleiner 1 cm³/m²·d·bar und insbesondere kleiner 0,5 cm³/m²·d·bar aufweist, gemessen gemäß ASTM 3985. Wasserdampfdurchlässig ist eine Schicht im Sinne der vorliegenden Erfindung, wenn sie einen Wert s_{d} von kleiner oder gleich 50 m, bevorzugt kleiner oder gleich 40 m bei 23°C / 0-80 r.F. gemäß DIN EN 12086 aufweist.

Eine Schicht ist alkalibeständig, wenn sie beispielsweise ETAG 004 erfüllt.

Bevorzugt sind sauerstoffdichte Schichten, die eine Wasserdampfdurchlässigkeit s_{d} von kleiner 10 m gemessen gemäß DIN EN 12086 bei 70°C/3-100 r.F aufweisen. Dies kann insbesondere mit sauerstoffdichten Schichten aus EVOH erzielt werden.

In einer bevorzugten Ausführungsform ist die sauerstoffdichte Schicht ein Copolymer aus Vinylalkohol und Ethylen. Besonders gute Eigenschaften lassen sich mit diesen Copolymeren erzielen, wenn der Ethylengehalt zwischen 25 und 45 mol-%, bevorzugt zwischen 27 und 38 mol-% und insbesondere zwischen 29 und 34 mol-%, beispielsweise 32 mol-%, liegt.

In einer weiteren Ausgestaltung kann die sauerstoffdichte Schicht, beispielsweise ein Ethylen-Vinylalkohol-Copolymer, auch Teil eines Coextrudats sein, welches ein- oder beidseitig weitere Schichten, beispielsweise Schutzschichten aus Polypropylen, aufweist. In einer speziellen Ausgestaltung liegt die sauerstoffdichte Schicht als coextrudierte Schicht mit einem Schichtaufbau ABA' vor, wobei A und A' Polypropylen und B ein Vinylalkohol-Ethylen-Copolymer darstellt. Gegebenenfalls können sich zwischen den Schichten A und B bzw. B und A' jeweils eine weitere coextrudierte Haftvermittlerschicht befinden.

In einer bevorzugten Ausgestaltung ist die Trägerschicht zwischen der sauerstoffdichten Schicht und der mineralischen Beschichtung angeordnet.

Eine erfindungsgemäße Decklage der vorliegenden Erfindung umfasst die folgenden Schichten:
a) eine sauerstoffdichte Schicht umfassend Ethylen-Vinylalkohol-Copolymer (EVOH)
b) eine Trägerschicht ausgewählt aus Glasfaservlies und Polyestervlies und
c) eine mineralische Beschichtung, welche Bestandteile aufweist, ausgewählt aus der Gruppe bestehend aus Calciumcarbonat, Siliziumdioxid, Bariumsulfat und beliebige Mischungen daraus, wobei bevorzugt die Trägerschicht zwischen der sauerstoffdichten Schicht und der mineralischen Beschichtung angeordnet ist.

In einer weiteren Ausgestaltung der Erfindung wird die erfindungsgemäße Decklage ein- oder beidseitig (Flachseiten) auf einer Dämmplatte, vorzugsweise aus Polyurethan und/oder Polyisocyanurat, aufgebracht, so dass die jeweilige sauerstoffdichte Schicht der Decklage den Flachseiten der Dämmplatte zugewandt sind.

Es hat sich gezeigt, dass die sauerstoffdichten Schichten auch dicht gegenüber CO₂ und Pentan sind.

Die erfindungsgemäßen Decklagen und Dämmplatten weisen den Vorteil auf, dass sie im Vergleich zu aluminiumkaschierten Systemen beputzbar und alkalibeständig sind.

Weitere vorteilhafte Ausgestaltungen wie auch Merkmale gehen aus der nachfolgenden Figur und der dazugehörigen Beschreibung hervor. Die aus der Figur und der Beschreibung hervorgehenden einzelnen Merkmale sind nur beispielhaft und nicht auf die jeweilige Ausgestaltung beschränkt. Es zeigen:
- Fig. 1: einen schematischen Aufbau eines Wärme-Dämm-Verbundsystems,
- Fig. 2: einen schematischen Aufbau einer Decklage,
- Fig. 3: einen schematischen Aufbau einer Decklage, bei der die Decklage eine Klebeschicht umfasst,
- Fig. 4: einen schematischen Aufbau einer Dämmplatte,
- Fig. 5: einen schematischen Aufbau einer Dämmplatte mit einer Decklage,
- Fig. 6: einen schematischen Aufbau einer Dämmplatte mit einer Decklage, bei der die Decklage eine Klebeschicht umfasst,
- Fig. 7: einen schematischen Aufbau einer Dämmplatte mit zwei Decklagen,
- Fig. 8: einen schematischen Aufbau einer Dämmplatte mit zwei Decklagen, und
- Fig. 9: einen schematischen Aufbau einer Dämmplatte mit zwei Decklagen, bei der die Decklagen jeweils eine Klebeschicht umfassen.

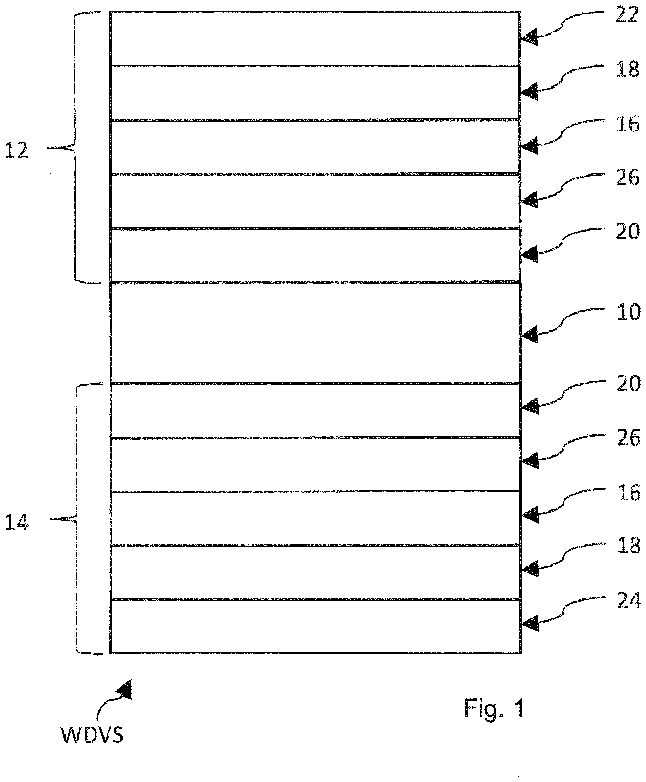

Fig. 1 zeigt einen schematischen Aufbau eines Wärme-Dämm-Verbundsystems WDVS mit plattenförmigen Dämmstoff 10 zum Dämmen einer Gebäudeaußenwand. Der Dämmstoff 10 weist beispielsweise einen PU-Schaum auf, besteht vorzugsweise aus PU-Schaum, und hat eine erste Seite und eine der ersten Seite gegenüberliegenden zweite Seite, wobei auf der ersten Seite eine erste Decklage 12 aufgebracht ist und auf der zweiten Seite eine zweite Decklage 14 aufgebracht ist. Die erste Decklage 12 und die zweite Decklage 14 umfassen jeweils eine Trägerschicht 16 und eine damit verbundene erste Deckschicht 18 in Form von vorzugsweise einer mineralischen Beschichtung. Die erste Decklage 12 und die zweite Decklage 14 weist jeweils auf der der ersten Deckschicht 18 gegenüberliegenden Seite der Trägerschicht 16 eine zweite Deckschicht 20 auf, wobei die zweite Deckschicht 20 der ersten Decklage 12 mit der ersten Seite des Dämmstoffes 10 verbunden ist und die zweite Deckschicht 20 der zweiten Decklage 14 mit der zweiten Seite des Dämmstoffes 10 verbunden ist. Die zweite Deckschicht 20 ist vorzugsweise ebenfalls eine mineralische Beschichtung.

Die Trägerschicht 16 ist auf der Basis von Vlies, wie Glasfaservlies, und die damit verbundene erste Deckschicht 18 auf Basis anorganischer Füllstoffe, wie Calciumcarbonat, ausgebildet. Die Trägerschicht 16 weist beispielsweise ein Gewicht zwischen 30 und 80g/m², bevorzugt von 50 g/m² auf und die erste Deckschicht weist ein Gewicht von 100 bis 450 g/m², vorzugsweise 180 g/m² bis 350 g/m², vorzugsweise etwa 230 g/m² auf. Die erste Decklage 12 und die zweite Decklage 14 sind in ihrem nicht mit dem Dämmstoff 10 verbundenen Zustand vorzugsweise in Rollen wickelbar.

In Fig. 1 ist erkennbar, dass auf die erste Decklage 12 auf der ersten Deckschicht 18 beispielhaft ein Armierungsmörtel 22 aufgebracht ist, um eine Armierung aufzunehmen, wobei die Armierung als Grundlage für den Außenputz dient. Der Armierungsmörtel 22 wirkt somit als ein erster Kleber. Hierbei handelt es sich vorzugsweise um einen mineralischen Kleber, der als hochvergüteter Kleber ein Polymermaterial enthält. Die zweite Decklage 14 weist auf der ersten Deckschicht 18 zum Beispiel einen zweiten Kleber 24 auf. Dieser erlaubt beispielsweise, dass die zweite Decklage 14 mit einer Wand, vorzugsweise einer Gebäudeaußenwand, verbindbar ist. Zur Sicherung können zusätzliche Befestigungsmittel wie Ankerschrauben eingesetzt werden. Zumindest die erste Deckschicht 18, vorzugsweise der gesamte Verbund mit erster und zweiter Decklage 12, 14 ist alkalibeständig ausgebildet, so dass zumindest die erste Deckschicht 18 bzw. der Verbund mit zementärem Mörtel bearbeitbar ist. Bevorzugt ist nicht nur die gasdichte Schicht und nicht nur eine der Decklagen, sondern das gesamte Schichtsystem des Wärme-Dämm-Verbundsystems alkalibeständig gemäß ETAG 004. Die beiden Schichten Armierungsmörtel 22 und zweiter Kleber 24 werden erst bauseitig aufgetragen und sind daher nicht den beiden Decklagen 12, 14 zuzurechnen.

Die zweite Deckschicht 20 ist eine sauerstoffdichte Deckschicht, die auch vorzugsweise wasserdampfdurchlässig ist. Sie weist zum Beispiel eine Dicke von kleiner gleich 1 mm, insbesondere kleiner gleich 60µm auf. Weiterhin ist die zweite Deckschicht mit einem Kleber 26, insbesondere einem PU-Hotmelt-Kleber, an der Trägerschicht 16 befestigt. Gemäß DIN EN 13165 ist eine Deckschicht gasdicht bei Verwendung von 50 µm Aluminium oder wenn die gemessene Sauerstoffdurchlässigkeit gemäß ASTM 3985 kleiner 4,5 cm³/(m² d bar) ist. Weiterhin weist die zweite Deckschicht 20 eine nicht wasserdampfdichte Eigenschaft auf, so dass Baufeuchte immer noch ausdiffundieren kann. Die zweite Deckschicht 20 weist dabei zum Beispiel eine Dicke von 60µm auf.

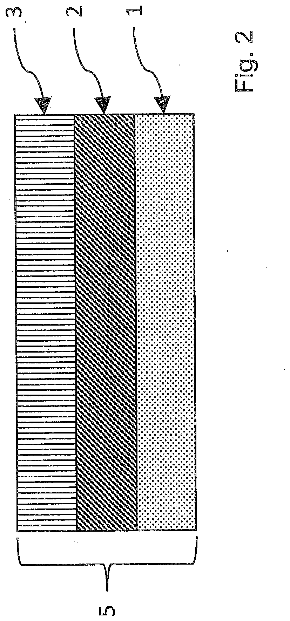

Fig. 2 zeigt einen schematischen Aufbau einer Decklage 5. Die dargestellte Decklage 5 besteht aus einer sauerstoffdichten Schicht 1, einer Trägerschicht 2 und einer Beschichtung 3. Die Trägerschicht 2 befindet sich zwischen der gasdichten Schicht 1 und der mineralischen Schicht 3.

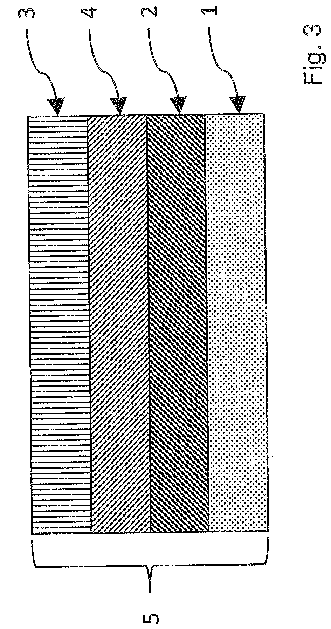

Fig. 3 zeigt einen schematischen Aufbau einer weiteren Decklage 5. Die dargestellte Decklage 5 besteht aus einer sauerstoffdichten Schicht 1, einer Kleberschicht 2, einer Trägerschicht 4 und einer Beschichtung 3. Die Kleberschicht 2 befindet sich zwischen der Trägerschicht 4 und der gasdichten Schicht 1.

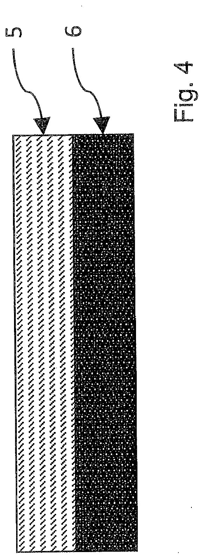

Fig. 4 zeigt einen schematischen Aufbau einer Dämmplatte aufweisend eine Decklage 5 und einen Dämmstoff 6.

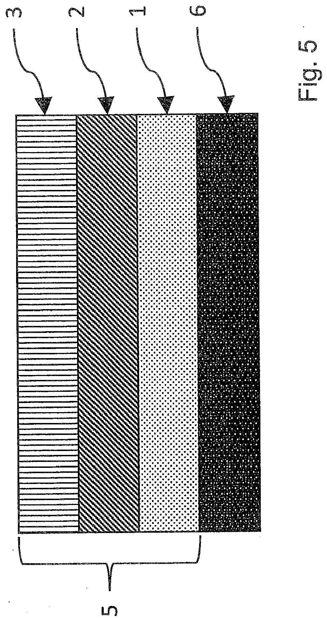

Fig. 5 zeigt einen schematischen Aufbau einer Dämmplatte mit einer Decklage 5 und einem Dämmstoff 6. Die Decklage 5 weist in diesem Fall eine sauerstoffdichte Schicht 1, eine Trägerschicht 2 und eine Beschichtung 3 auf. Die Trägerschicht 2 befindet sich zwischen der gasdichten Schicht 1 und der mineralischen Schicht 3.

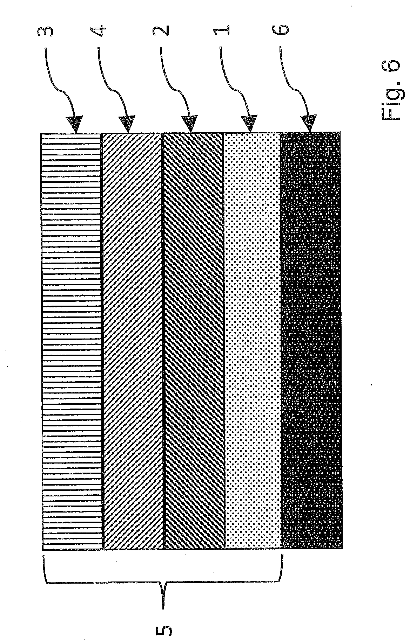

Fig. 6 zeigt einen schematischen Aufbau einer Dämmplatte bestehend aus einer Decklage 5 und einem Dämmstoff 6. Die Decklage 5 besteht aus einer sauerstoffdichten Schicht 1, einer Kleberschicht 2, einer Trägerschicht 4 und einer Beschichtung 3. Die Kleberschicht 2 befindet sich zwischen der Trägerschicht 4 und der gasdichten Schicht 1.

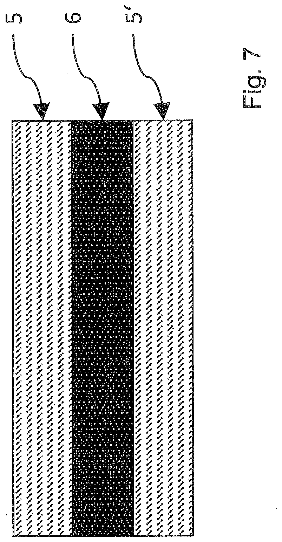

Fig. 7 zeigt einen schematischen Aufbau einer Dämmplatte bestehend aus einer Decklage 5, einem Dämmstoff 6 und einer zweiten Decklage 5'.

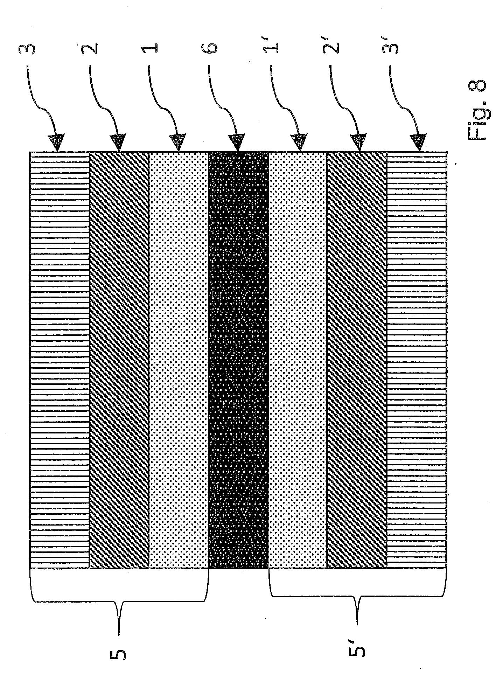

Fig. 8 zeigt einen schematischen Aufbau einer Dämmplatte aufweisend eine Decklage 5, einem Dämmstoff 6 und einer zweiten Decklage 5'. Die Decklage 5 besteht aus einer sauerstoffdichten Schicht 1, einer Trägerschicht 2 und einer Beschichtung 3. Die Trägerschicht 2 befindet sich zwischen der sauerstoffdichten Schicht 1 und der mineralischen Schicht 3. Die Decklage 5' besteht aus einer sauerstoffdichten Schicht 1', einer Trägerschicht 2' und einer Beschichtung 3'. Die Trägerschicht 2' befindet sich zwischen der sauerstoffdichten Schicht 1' und der mineralischen Schicht 3'.

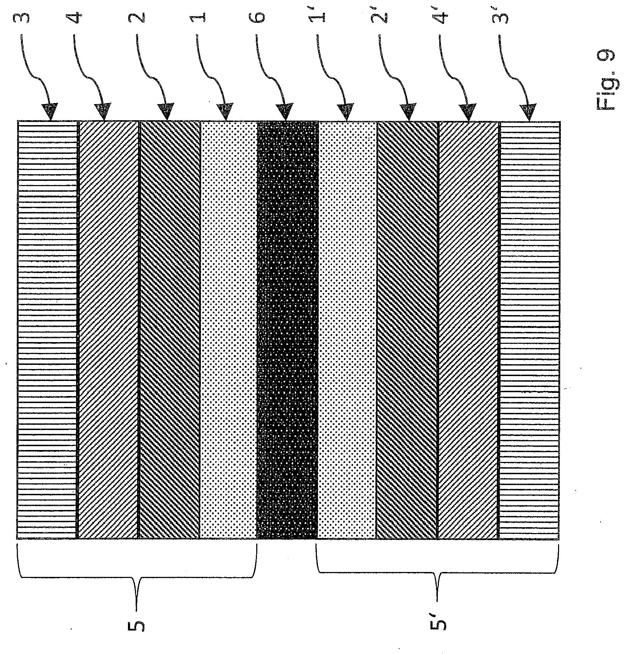

Fig. 9 zeigt einen schematischen Aufbau einer Dämmplatte bestehend aus einer Decklage 5, einem Dämmstoff 6 und einer zweiten Decklage 5'.Die Decklage 5 besteht aus einer sauerstoffdichten Schicht 1, einer Trägerschicht 4, einer Kleberschicht 2 und einer Beschichtung 3. Die Kleberschicht 2 befindet sich zwischen der Trägerschicht 4 und der sauerstoffdichten Schicht 1. Die Decklage 5' besteht aus einer sauerstoffdichten Schicht 1', einer Trägerschicht 4', einer Kleberschicht 2' und einer Beschichtung 3'. Die Kleberschicht 2' befindet sich zwischen der Trägerschicht 4' und der sauerstoffdichten Schicht 1'.

Die Tabellen 1, 2 und 3 zeigen Messergebnisse für die Wasserdampfdurchlässigkeit in einem Laborversuch der ersten Deckschicht 12 auf einem Dämmstoff 10. Für die Laborversuche wurden Prüflinge von einer fertigen Dämmplatte ausgeschnitten, wobei ein Rest von 3,5 mm dickem PU-Schaum verbleiben sollte, um einen praxisbezogenen Wert zu erhalten und um die verwendete Folie nicht zu beschädigen, sofern ein Teil des PU-Schaums abzukratzen wäre. Die Proben bestanden aus einer Decklage bestehend aus einer coextrudierten Folie umfassend Polypropylen-EVOH-Polypropylen, einem Glasfaservlies und einer mineralischen Beschichtung aus CaCO₃. Die Decklage wurde auf Polyurethan aufgebracht, so dass die sauerstoffdichte Schicht dem PU zugewandt ist. Es wurden 4 mm dicke Prüfkörper hergestellt. Die für die Versuche verwendeten Proben sind in den Tabellen 1a, 2a und 3a dargestellt. Die Prüfung wurde entsprechend den Vorgaben aus DIN EN 12086 durchgeführt.

Tabelle 1 zeigt die Ergebnisse bei einer Temperatur von 23°C und einer relativen Luftfeuchtigkeit von 0% auf der einen Seite und 80% auf der anderen Seite.

In Tabelle 1a sind die Angaben der Probenkörper dargestellt

**Tabelle 1a**

| | | Probe | | | | |
|---|---|---|---|---|---|---|
| | Maßeinheit | 1 | 2 | 3 | 4 | 5 |
| Durchmesser | mm | 137 | 137 | 137 | 137 | 137 |
| Durchmesser der freien Prüffläche | mm | 127 | 127 | 127 | 127 | 127 |
| Dicke | mm | 4,1 | 4,0 | 4,2 | 4,0 | 4,1 |
| Prüffläche | cm² | 127 | 127 | 127 | 127 | 127 |
| Flächenmasse | g/m² | 540 | 660 | 550 | 540 | 540 |

Es wurden für den Versuch folgende Randbedingungen verwendet:
Sorbentium: Caliumchlorid 0 (+2)% relative Luftfeuchtigkeit bei 23 (±0,3) °C
Klimaschrank: 80 (±1)% relative Luftfeuchtigkeit bei 23 (±0,3)°C
Mittlerer Luftdruck (p) während der Prüfzeit:991 hPa

**Tabelle 1**

| Probe | Wasserdampf-Diffusionsstrom-Dichte | Wasserdampf-Diffusionsdurchlasskoeffizient | Wasserdampf-Diffusionsäquivalente Luftschichtdicke | Mittlere Wasserdampf-Diffusionswiderstandszahl |
|---|---|---|---|---|
| | g | W | s_{d} | µ |
| | [kg/(m²*s)] | [kg/(m²*s*Pa)] | [m] | [-] |
| 1 | 1,98E-0,8 | 8,84E-12 | 22,6 | 5470 |
| 2 | 8,35E-0,9 | 3,72E-12 | 54,2 | 13420 |
| 3 | 2,31E-0,8 | 1,03E-11 | 19,4 | 4580 |
| 4 | 1,06E-0,8 | 4,73E-12 | 42,4 | 10720 |
| 5 | 9,94E-0,9 | 4,43E-12 | 45,4 | 11110 |
| **Mittelwert** | **1,4E-0,8** | **6,4E-12** | **36,8** | **9100** |

Tabelle 2 zeigt die Ergebnisse bei einer Temperatur von 30°C und einer relativen Luftfeuchtigkeit von 0% auf der einen Seite und 80% auf der anderen Seite.

In Tabelle 2a sind die Angaben der Probenkörper dargestellt

**Tabelle 2a**

| | | Probe | | | | |
|---|---|---|---|---|---|---|
| | Maßeinheit | 1 | 2 | 3 | 4 | 5 |
| Durchmesser | mm | 137 | 137 | 137 | 137 | 137 |
| Durchmesser der freien Prüffläche | mm | 127 | 127 | 127 | 127 | 127 |
| Dicke | mm | 4,3 | 4,3 | 4,4 | 4,0 | 4,2 |
| Prüffläche | cm² | 127 | 127 | 127 | 127 | 127 |
| Flächenmasse | g/m² | 550 | 640 | 550 | 640 | 650 |

Es wurden für den Versuch folgende Randbedingungen verwendet:
Sorbentium: Caliumchlorid 0 (+2)% relative Luftfeuchtigkeit bei 30 (±0,3) °C
Klimaschrank: 80 (±1)% relative Luftfeuchtigkeit bei 30 (±0,3)°C
Mittlerer Luftdruck (p) während der Prüfzeit:995 hPa

**Tabelle 2**

| Probe | Wasserdampf-Diffusionsstrom-Dichte | Wasserdampf-Diffusionsdurchlasskoeffizient | Wasserdampf-Diffusionsäquivalente Luftschichtdicke | Mittlere Wasserdampf-Diffusionswiderstandszahl |
|---|---|---|---|---|
| | g | W | s_{d} | µ |
| | [kg/(m²*s)] | [kg/(m²*s*Pa)] | [m] | [-] |
| 1 | 1,97E-0,8 | 5,81E-12 | 35,1 | 8190 |
| 2 | 1,46E-0,8 | 4,31E-12 | 47,2 | 11060 |
| 3 | 2,98E-0,8 | 8,53E-11 | 23,8 | 5460 |
| 4 | 1,85E-0,8 | 5,45E-12 | 37,4 | 9460 |
| 5 | 9,69E-0,8 | 4,99E-12 | 40,8 | 9610 |
| **Mittelwert** | **2,OE-0,8** | **5,8E-12** | **36,9** | **8800** |

Tabelle 3 zeigt die Ergebnisse bei einer Temperatur von 70°C und einer relativen Luftfeuchtigkeit von 3% auf der einen Seite und 100% auf der anderen Seite.

In Tabelle 3a sind die Angaben der Probenkörper dargestellt

**Tabelle 3a**

| | | Probe | | | | |
|---|---|---|---|---|---|---|
| | Maßeinheit | 1 | 2 | 3 | 4 | 5 |
| Durchmesser | mm | 137 | 137 | 137 | 137 | 137 |
| Durchmesser der freien Prüffläche | mm | 127 | 127 | 127 | 127 | 127 |
| Dicke | mm | 4,5 | 4,3 | 4,4 | 4,0 | 4,2 |
| Prüffläche | cm² | 127 | 127 | 127 | 127 | 127 |
| Flächenmasse | g/m² | 540 | 640 | 550 | 640 | 650 |

Es wurden für den Versuch folgende Randbedingungen verwendet:
Sorbentium: destilliertes Wasser 100 (-2)% relative Luftfeuchtigkeit bei 70 (±0,5) °C
Klimaschrank: 3 (±1)% relative Luftfeuchtigkeit bei 70 (±0,5)°C
Mittlerer Luftdruck (p) während der Prüfzeit: 1003 hPa

**Tabelle 3**

| Probe | Wasserdampf-Diffusionsstrom-Dichte | Wasserdampf-Diffusionsdurchlasskoeffizient | Wasserdampf-Diffusionsäquivalente Luftschichtdicke | Mittlere Wasserdampf-Diffusionswiderstandszahl |
|---|---|---|---|---|
| | g | W | s_{d} | µ |
| | [kg/(m²*s)] | [kq/(m²*s*Pa)] | [m] | [-] |
| 1 | 1,77E-0,6 | 6,17E-11 | 3,59 | 800 |
| 2 | 1,43E-0,6 | 4,99E-11 | 4,44 | 1130 |
| 3 | 1,18E-0,6 | 4,11E-11 | 4,39 | 1300 |
| 4 | 1,35E-0,6 | 4,70E-11 | 4,72 | 1010 |
| 5 | 1,47E-0,6 | 5,13E-11 | 4,33 | 1160 |
| **Mittelwert** | **1,4E-0,6** | **5.0E-11** | **4,5** | **1100** |

Aus den Tabellen 1, 2 und 3 ist entnehmbar, dass der Wasserdampfdiffusionswiderstand der Probekörper mit zunehmender Temperatur abnimmt.

Bevorzugt wird ein Verbund mit der vorgeschlagenen Decklage als Wärme-Dämm-Verbundsystem vorgesehen, wobei die Decklage mit einer Polyurethan-Dämmplatte verbunden ist, wobei das Wärme-Dämm-Verbundsystem wasserdampfdiffusionsoffen ist, andererseits nach DIN EN 13165 diffusionsdicht ist, wobei das Wärme-Dämm-Verbundsystem in einer Wärmeleitfähigkeitsgruppe mit 023 bis 024 W/(m*K) oder besser eingestuft ist. Bevorzugt ist des Weiteren, die Decklage beputzbar auszuführen, wobei als Dämmstoff vorzugsweise PU eingesetzt wird. Es hat sich herausgestellt, dass auf diese Weise ein zumindest gleicher wenn nicht besserer WLG-Wert im Vergleich zu mit Aluminium kaschierten Platten einstellbar ist. Gegenüber diffusionsoffenen Deckschichten ohne eine gasdichte Schicht ergibt sich ebenfalls ein relevanter Unterschied, da letztere eine WLG-Einstufung von 026 bis 029 W/(m*K) aufweisen. Damit derartige Deckschichten aber auf einen Dämmwert kommen, der vergleichbar zu dem bei Nutzung der vorgeschlagenen Decklage mit gasdichter Schicht sind, sind sehr viel dickere Dämmplatten notwendig.

## Patentansprüche

1. Decklage zur Verwendung auf einer Dämmung aus Polyurethan (PUR)- oder Polyisocyanurat-Hartschaum (PIR), umfassend oder bestehend aus folgenden Schichten:
a) einer sauerstoffdichten Schicht (1),
b) einer Trägerschicht (2), und
c) einer mineralischen Schicht (3), wobei die sauerstoffdichte Schicht (1) wasserdampfdurchlässig und alkalibeständig ist, wobei der Sauerstoff-Diffusionswert der Decklage kleiner 4,5 ml/m² x d gemäß ASTM 3985 und die Wasserdampfdurchlässigkeit einen Wert s_{d} von größer oder gleich 4 m, gemäß DIN 12086, aufweist und die Alkalibeständigkeit gemäß der Norm "External Thermal Insulation - Composite Systems (ETICS) with Rendering", ETAG 004, Ausgabe 200, erweitert Februar 2013, gegeben ist.

2. Decklage nach Anspruch 1, **dadurch gekennzeichnet, dass** die Decklage zusätzlich eine Kleberschicht (4) umfasst, die zwischen Trägerschicht (2) und gasdichter Schicht (1) liegt.

3. Decklage nach einem der vorherigen Ansprüche, **dadurch gekennzeichnet, dass** die sauerstoffdichte Schicht (1) ein Mehrlagenfilm mit einer Schicht aus EVOH ist, welche zumindest auf einer Seite, mit einer Schutzschicht versehen ist, wobei die Schutzschicht aus ein oder mehreren Polyolefinen besteht.

4. Decklage nach einem der vorherigen Ansprüche, **dadurch gekennzeichnet, dass** die gasdichte Schicht (1) eine Dicke von 10 bis 200 µm, vorzugsweise von 15 bis 150 µm oder 30 bis 100 µm.

5. Decklage nach einem der vorherigen Ansprüche, **dadurch gekennzeichnet, dass** die Trägerschicht (2) ein Glasfaservlies, ein Glasfaser/Polyester-Gemisch-Vlies, ein Glasgewebevlies, Glasgelegevlies oder ein Polyestervlies ist.

6. Decklage nach einem der vorherigen Ansprüche, **dadurch gekennzeichnet, dass** die Trägerschicht (2) ein Gewicht von 30 g/m² bis 300 g/m² aufweist.

7. Decklage nach einem der vorherigen Ansprüche, **dadurch gekennzeichnet, dass** die mineralische Schicht (3) i) einen anorganischen Bestandteil ausgewählt aus der Gruppe bestehend aus Calciumcarbonat, Siliziumdioxid, Bariumsulfat und Mischungen daraus und ii) ein Bindemittel enthält.

8. Decklage nach einem der vorherigen Ansprüche, **dadurch gekennzeichnet, dass** die Schichten in nachfolgender Reihenfolge angeordnet sind:
gasdichte Schicht (1),
Kleberschicht (4),
Trägerschicht (2), und
mineralische Schicht (3).

9. Decklage gemäß einem oder mehreren der vorangehenden Ansprüche, umfassend
a) eine sauerstoffdichte Schicht (1) umfassend Ethylen-Vinylalkohol-Copolymer (EVOH),
b) eine Trägerschicht ausgewählt aus Glasfaservlies und/oder Polyestervlies und
c) eine mineralische Beschichtung, welche Bestandteile, ausgewählt aus der Gruppe bestehend aus Calciumcarbonat, Siliziumdioxid und Bariumsulfat und beliebige Mischungen daraus, enthält, wobei die Trägerschicht zwischen der sauerstoffdichten Schicht und der mineralischen Schicht angeordnet ist.

10. Dämmplatte umfassend oder bestehend aus:
a) einer Decklage (5) nach einem der Ansprüche 1 bis 9,
b) einem Dämmstoff (6) aus Polyurethan-Hartschaum oder Polyisocyanurat-Hartschaum und optional
c) einer zweiten Decklage (5') nach einem der Ansprüche 1 bis 9.

11. Dämmplatte gemäß Anspruch 10, **dadurch gekennzeichnet, dass** der Dämmstoff ein Schaum ist, der durch Reaktion einer Isocyanatkomponente ausgewählt aus der Gruppe bestehend aus Hexamethylendiisocyanat (HDI), Toluylendiisocyanat (TDI), Methylen-di(phenylisocyanat) (MDI), Polymeres Diphenylmethandiisocyanat (PMDI), Naphthylendiisocyanat (NDI), Isophorondiisocyanat (IPDI) und 4,4'-Diisocyanatodicyclohexylmethan (H12MDI) mit einer Polyolkomponente hergestellt wird.

12. Dämmplatte nach einem der Ansprüche 10 oder 11, wobei es sich bei der Dämmplatte um ein Fliesenträgerelement oder eine Bauplatte für die Innenraumdämmung oder ein Wärme-Dämm-Verbundsystem im Fassadenbereich handelt.

13. Verfahren zur Herstellung einer Dämmplatte, umfassend die folgenden Schritte:
- Bereitstellen einer Decklage (5) nach einem der Ansprüche 1 bis 9,
- Aufbringen eines Dämmstoffes (6) aus Polyurethan oder Polyisocyanurat auf die bereitgestellte Decklage (5) und
- optionales Aufbringen einer zweiten Decklage (5') nach einem der Ansprüche 1 bis 9 auf den Dämmstoff (6)
oder
- Bereitstellen eines Dämmstoffes (6) aus Polyurethan oder Polyisocyanurat,
- Aufbringen einer Decklage (5) nach einem der Ansprüche 1 bis 9 auf den bereitgestellten Dämmstoff (6) und
- optionales Aufbringen einer zweiten Decklage (5') nach einem der Ansprüche 1 bis 9 auf den bereitgestellten Dämmstoff (6).

14. Wärme-Dämm-Verbundsystem mit plattenförmigen oder abwickelbarem Dämmstoff (10) aus Polyurethan oder Polyisocyanurat zum Dämmen einer Wand, wobei der Dämmstoff (10) eine erste Seite und eine der ersten Seite gegenüberliegenden zweite Seite aufweist, wobei auf der ersten Seite eine erste Decklage (12) gemäß einem oder mehreren der Ansprüche 1 bis 9 aufgebracht ist und auf der zweiten Seite eine zweite Decklage (14) aufgebracht ist, wobei die erste Decklage (12) und die zweite Decklage (14) jeweils eine Trägerschicht (16) und eine damit verbundene erste Deckschicht (18) umfassen, wobei die erste Decklage (12) und die zweite Decklage (14) jeweils auf der der ersten Deckschicht (18) gegenüberliegenden Seite der Trägerschicht (16) eine zweite Deckschicht (20) aufweisen, wobei die zweite Deckschicht (20) der ersten Decklage (12) mit der ersten Seite des Dämmstoffs (10) verbunden ist und die zweite Deckschicht (20) der zweiten Decklage (14) mit der zweiten Seite des Dämmstoffs (10) verbunden ist, wobei zumindest eine der beiden zweiten Deckschichten (20) eine gasdichte Deckschicht ist.

15. Wärme-Dämm-Verbundsystem gemäß Anspruch 14, **dadurch gekennzeichnet, dass** die erste Decklage (12) auf der ersten Deckschicht (18) im verbauten Zustand des Wärme-Dämm-Verbundsystems einen Kleber, einen Putz oder eine Farbe aufweist und die zweite Decklage (14) mit der Gebäudeaußenwand verbunden ist.

## Claims

1. A topsheet for use on an insulation of polyurethane (PUR) or polyisocyanurate rigid foam (PIR), comprising or consisting of the following layers:
a) an oxygen-tight layer (1),
b) a support layer (2), and
c) a mineral layer (3),
wherein said oxygen-tight layer (1) is moisture-permeable and alkali-resistant, wherein the oxygen diffusion rate of the topsheet is lower than 4.5 ml/m² x d according to ASTM 3985, and the moisture permeability has a value s_{d} of higher than or equal to 4 m according to DIN 12086, and the alkali resistance is met according to the standard "External Thermal Insulation - Composite Systems (ETICS) with Rendering", ETAG 004, Edition 2000, extended February 2013.

2. The topsheet according to claim 1, **characterized in that** the topsheet additionally includes an adhesive layer (4) situated between said support layer (2) and said gas-tight layer (1).

3. The topsheet according to any of the preceding claims, **characterized in that** said oxygen-tight layer (1) is a multilayer film comprising a layer of EVOH provided with a protective layer on at least one side thereof, the protective layer consisting of one or more polyolefins.

4. The topsheet according to any of the preceding claims, **characterized in that** said gas-tight layer (1) has a thickness of from 10 to 200 µm, preferably from 15 to 150 µm, or from 30 to 100 µm.

5. The topsheet according to any of the preceding claims, **characterized in that** said support layer (2) is a glass fiber mat, a glass fiber/polyester mixed non-woven, a glass fabric cloth, a glass non-woven scrim, or polyester non-woven.

6. The topsheet according to any of the preceding claims, **characterized in that** said support layer (2) has a basis weight of from 30 g/m² to 300 g/m².

7. The topsheet according to any of the preceding claims, **characterized in that** said mineral layer (3) contains i) an inorganic component selected from the group consisting of calcium carbonate, silicon dioxide, barium sulfate and mixtures thereof, and ii) a binder.

8. The topsheet according to any of the preceding claims, **characterized in that** said layers are provided in the following order:
gas-tight layer (1),
adhesive layer (4),
support layer (2), and
mineral layer (3).

9. The topsheet according to one or more of the preceding claims, comprising
a) an oxygen-tight layer (1) comprising an ethylene/vinyl alcohol copolymer (EVOH),
b) a support layer selected from a glass fiber mat and/or a polyester non-woven, and
c) a mineral coating containing components selected from the group consisting of calcium carbonate, silicon dioxide and barium sulfate and any mixtures thereof,
said support layer being provided between said oxygen-tight layer and the mineral layer.

10. An insulation board comprising or consisting of:
a) a topsheet (5) according to any of claims 1 to 9,
b) an insulation material (6) made of polyurethane rigid foam or polyisocyanurate rigid foam, and optionally
c) a second topsheet (5') according to any of claims 1 to 9.

11. The insulation board according to claim 10, **characterized in that** said insulation material is a foam prepared by the reaction of an isocyanate component selected from the group consisting of hexamethylene diisocyanate (HDI), toluene diisocyanate (TDI), methylene di(phenylisocyanate) (MDI), polymeric diphenylmethane diisocyanate (PMDI), naphthylene diisocyanate (NDI), isophorone diisocyanate (IPDI), and 4,4'-diisocyanatodicyclohexylmethane (H12MDI), with a polyol component.

12. The insulation board according to either of claims 10 or 11, wherein said insulation board is a tile support element, or a construction board for interior insulation, or a heat insulation composite system for facades.

13. A process for preparing an insulation board, comprising the following steps:
- providing a topsheet (5) according to any of claims 1 to 9,
- applying an insulation material (6) made of polyurethane or polyisocyanurate to the provided topsheet (5), and
- optionally applying a second topsheet (5') according to any of claims 1 to 9 to said insulation material (6);
or
- providing an insulation material (6) made of polyurethane or polyisocyanurate,
- applying a topsheet (5) according to any of claims 1 to 9 to the provided insulation material (6), and
- optionally applying a second topsheet (5') according to any of claims 1 to 9 to the provided insulation material (6).

14. A heat insulation composite system with a plate-shaped or unwindable insulation material (10) made of polyurethane or polyisocyanurate for insulating a wall, wherein said insulation material (10) has a first side and a second side opposite said first side, wherein a first topsheet (12) according to one or more of claims 1 to 9 is applied to said first side, and a second topsheet (14) is applied to said second side, wherein said first topsheet (12) and said second topsheet (14) each include a support layer (16) and a cover layer (18) bonded thereto, wherein said first topsheet (12) and said second topsheet (14) each have a second cover layer (20) on the side of the support layer (16) opposing said first cover layer (18), wherein said second cover layer (20) of said first topsheet (12) is bonded to the first side of the insulation material (10), and the second cover layer (20) of said second topsheet (14) is bonded to the second side of the insulation material (10), wherein at least one of the two second cover layers (20) is a gas-tight cover layer.

15. The heat insulation composite system according to claim 14, **characterized in that** said first topsheet (12) has an adhesive, a plaster or a paint on said first cover layer (18) in the built-in state of the heat insulation composite system, and said second topsheet (14) is bonded to the exterior wall of the building.

## Revendications

1. Feuille supérieure pour être utilisée sur une isolation en mousse dure de polyuréthane (PUR) ou polyisocyanurate (PIR), comprenant ou consistant en les couches suivantes :
a) une couche étanche à l'oxygène (1),
b) une couche de support (2), et
c) une couche minérale (3), dans laquelle ladite couche étanche à l'oxygène (1) est perméable à l'humidité et résistante aux alcalis, dans laquelle le débit de diffusion de l'oxygène de ladite feuille supérieure est inférieur à 4,5 ml/m² x d selon ASTM 3985, et la perméabilité à l'humidité présente une valeur s_{d} supérieure ou égale à 4 m selon DIN 12086, et la résistance aux alcalis est remplie selon la norme "External Thermal Insulation - Composite Systems (ETICS) with Rendering", ETAG 004, Edition 2000, étendue en février 2013.

2. Feuille supérieure selon la revendication 1, **caractérisée en ce que** ladite feuille supérieure comprend en outre une couche adhésive (4), qui est située entre ladite couche de support (2) et ladite couche étanche aux gaz (1).

3. Feuille supérieure selon l'une des revendications précédentes, **caractérisée en ce que** ladite couche étanche à l'oxygène (1) est une film multicouche comprenant une couche d'EVOH procurée avec une couche protectrice sur au moins un de ses côtés, dans laquelle ladite couche protectrice consiste en un ou plusieurs polyoléfines.

4. Feuille supérieure selon l'une quelconque des revendications précédentes, **caractérisée en ce que** ladite couche étanche aux gaz (1) présente une épaisseur de 10 à 200 µm, de préférence de 15 à 150 µm, ou de 30 à 100 µm.

5. Feuille supérieure selon l'une quelconque des revendications précédentes, **caractérisée en ce que** ladite couche de support (2) est une nappe de fibres de verre, un non-tissé mixte de fibres de verre/polyester, une nappe de tissu de verre, une grille non tissée de verre, ou un non tissé de polyester.

6. Feuille supérieure selon l'une quelconque des revendications précédentes, **caractérisée en ce que** ladite couche de support (2) présente un poids de base de 30 g/m² à 300 g/m².

7. Feuille supérieure selon l'une quelconque des revendications précédentes, **caractérisée en ce que** ladite couche minérale (3) contient i) un composant inorganique choisi dans le groupe consistant en carbonate de calcium, dioxyde de silicium, sulfate de baryum, et des mélanges de ceux-ci, et ii) un liant.

8. Feuille supérieure selon l'une quelconque des revendications précédentes, **caractérisée en ce que** les couches sont procurées dans l'ordre suivant :
couche étanche aux gaz (1),
couche adhésive (4),
couche de support (2), et
couche minérale (3).

9. Feuille supérieure selon l'une ou plusieurs des revendications précédentes, comprenant :
a) une couche étanche à l'oxygène (1) comprenant un copolymère d'éthylène/alcool vinylique (EVOH),
b) une couche de support choisie parmi une nappe de fibres de verre, et/ou un non-tissé polyester, et
c) un revêtement minéral contenant des composants choisis dans le groupe consistant en carbonate de calcium, dioxyde de silicium, et sulfate de baryum, et des mélanges quelconques de ceux-ci, dans laquelle ladite couche de support est procuré est procurée entre ladite couche étanche à l'oxygène et ladite couche minérale.

10. Panneau isolant, comprenant ou consistant en :
a) une feuille supérieure (5) selon l'une quelconque des revendications 1 à 9,
b) un matériau isolant (6) en mousse dure de polyuréthane ou mousse dure de polyisocyanurate, et éventuellement
c) une seconde feuille supérieure (5') selon l'une quelconque des revendications 1 à 9.

11. Panneau isolant selon la revendication 10, **caractérisé en ce que** ledit matériau isolant est une mousse préparée par la réaction d'un composant isocyanate choisi dans le groupe consistant en diisocyanate d'hexaméthylène (HDI), diisocyanate de toluène (TDI), isocyanate de méthylène diphényle (MDI), diisocyanate de diphénylméthane polymère (PMDI), diisocyanate de naphtylène (NDI), diisocyanate d'isophorone (IPDI), et 4,4'-diisocyanatodicyclohéxyleméthane (H12MDI), avec un composant de polyol.

12. Panneau isolant selon l'une des revendications 10 ou 11, ledit panneau isolant étant un élément de support de dalles ou une plaque de construction pour l'isolation de l'intérieur, ou un système composite d'isolation thermique d'une façade.

13. Procédé pour fabriquer un panneau isolant, comprenant les étapes suivantes consistant à :
- procurer une feuille supérieure (5) selon l'une quelconque des revendications 1 à 9,
- appliquer un matériau isolant (6) en polyuréthane ou polyisocyanurate à la feuille supérieure (5) procurée, et
- éventuellement appliquer une seconde feuille supérieure (5') selon l'une quelconque des revendications 1 à 9 au matériau isolant (6),
ou
- procurer un matériau isolant (6) en polyuréthane ou polyisocyanurate,
- appliquer une feuille supérieure (5) selon l'une quelconque des revendications 1 à 9 au matériau isolant (6) procuré, et
- éventuellement appliquer une seconde feuille supérieure (5') selon l'une quelconque des revendications 1 à 9 au matériau isolant (6) procuré.

14. Système composite d'isolation thermique avec un matériau isolant (10) en forme de plaques ou déroulable en polyuréthane ou polyisocyanurate pour isoler un mur, dans lequel ledit matériau isolant (10) présente un premier côté et un second côté opposé audit premier côté, dans lequel une première feuille supérieure (12) selon l'une ou plusieurs des revendications 1 à 9 est appliquée au premier côté, et une seconde feuille supérieure (14) est appliquée au second côté, dans lequel la première feuille supérieure (12) et la seconde feuille supérieure (14) comprennent chacune une couche de support (16) et une première couche supérieure (18) liée à celle-ci, dans lequel la première feuille supérieure (12) et la seconde feuille supérieure (14) présentent chacune une seconde couche supérieure (20) sur le côté de la couche de support (16) opposé à la première couche supérieure (18), dans lequel la seconde couche supérieure (20) de la première feuille supérieure (12) est liée au premier côté du matériau isolant (10), et la seconde couche supérieure (20) de la seconde feuille supérieure (14) est liée au second côté du matériau isolant (10), dans lequel au moins une des deux secondes couches supérieures (20) est une couche supérieure étanche aux gaz.

15. Système composite d'isolation thermique selon la revendication 4, **caractérisé en ce que** ladite première feuille supérieure (12) présente un adhésif, un crépi ou une peinture sur la première couche supérieure (18) dans l'état incorporé du système composite d'isolation thermique, et la seconde feuille supérieure (14) est liée au mur extérieur du bâtiment.
